(19) Europäisches Patentamt

European Patent Office

Office européen des brevets

(11) **EP 4 378 647 A1**

(12) **EUROPEAN PATENT APPLICATION**

(43) Date of publication:
**05.06.2024 Bulletin 2024/23**

(21) Application number: **22210632.0**

(22) Date of filing: **30.11.2022**

(51) International Patent Classification (IPC):
**B27D 3/02** $^{(2006.01)}$   **B27N 3/04** $^{(2006.01)}$
**B27N 3/08** $^{(2006.01)}$   **B27N 3/20** $^{(2006.01)}$
**B30B 7/02** $^{(2006.01)}$   **B30B 15/06** $^{(2006.01)}$

(52) Cooperative Patent Classification (CPC):
**B27N 3/203; B27N 3/04; B30B 7/02; B30B 15/06; B30B 15/062; B30B 15/064**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hitachi Energy Ltd**
**8050 Zürich (CH)**

(72) Inventors:
- **SAND, Ulf**
  **724 63 Västerås (SE)**
- **BEL FDHILA, Rebei**
  **724 76 Västerås (SE)**
- **SCHMIDT, Lars**
  **531 23 Bonn (DE)**

(74) Representative: **Valea AB**
**Box 1098**
**405 23 Göteborg (SE)**

(54) **A PRESS PLATE, A SYSTEM FOR COMPRESSING PRESSBOARD PRECURSOR AND A METHOD FOR COMPRESSING PRESSBOARD PRECURSOR**

(57)     A press plate (101) for compressing at least one pressboard precursor (102), wherein the press plate (101) comprises, at least one fluid permeable barrier layer (103, 105), wherein the at least one barrier layer (103, 105) prevents fibers to pass through the barrier layer (103), and wherein the at least one barrier layer (103, 105) has a first surface (108) arranged to face a pressboard precursor (102) to be compressed; a rigid press layer (104), the rigid press layer (104) comprising passages for fluid transport; and heating means (106) for heating the pressboard precursor(s) (102), a system for compressing at least one pressboard precursor (102) and a method for compressing at least one pressboard precursor (102).

Fig. 2a

## Description

TECHNICAL FIELD

The present disclosure relates to a press plate for compressing a pressboard precursor, a system for compressing pressboard precursor and a method for compressing pressboard precursor. Pressboard may be produced from cellulose fibers taken from wood. For example, pressboard may be produced from pure unbleached cellulose taken from wood, such as long fibered coniferous wood. Further, polymer fibers may be used or a combination of cellulose and polymer fibers.

BACKGROUND

Pressboard may be manufactured using hot press operation in which a plurality of wet pressboard precursor sheets are interposed between press plates of a multi-daylight press. The press plates and pressboard precursor sheets interposed between the press plates are pressed and heated to dry the precursors into finished pressboards. A wire-mesh may be used for avoiding that fibers in the pressboard precursor will escape. The water and vapor can escape through the precursor sheet and through the wire-mesh and in some cases the water and vapor may escape through small channels formed in the press plate surface. Those are limiting factors to a fast dewatering and drying and it may also affect the quality of the pressboard. The time required for a batch pressing may be 10 minutes to 3 hours, largely depending on thickness of the pressboard precursor and level of moisture content. Also, the process requires substantial amounts of energy for heating the press plates and the hot press chamber.

An object of the present disclosure is to provide an improved press plate for compressing pressboard precursors, to provide an improved process for compressing pressboard precursors, enabling a faster production of pressboards and higher energy efficiency.

SUMMARY

According to a first aspect, this and other objects is achieved by a press plate for compressing at least one pressboard precursor as defined in independent claim 1. The press plate comprises,

at least one fluid permeable barrier layer, wherein the at least one barrier layer prevents fibers to pass through the barrier layer, and wherein the at least one barrier layer has a first surface arranged to face a pressboard precursor to be compressed; a rigid press layer, the rigid press layer comprising passages for fluid transport; and heating means for heating the pressboard precursors.

When referring to "pressboard precursor" it is referred to the sheet or board before compression and drying. After compression and drying the expression "pressboard" is used. The compression of the pressboard precursor is performed under heat which dry the pressboard precursor and reduce the drying time when producing pressboards. The fluid transport through the press plate will be performed in an efficient and fast way due to the permeability of the barrier layer and that the rigid press layer comprises passages for fluid transport. Further, escape of fibers from the pressboard precursor is avoided by the fluid permeable barrier layer. The press plate provides a robust and reliable means for compressing the pressboard precursor and to remove liquid from the pressboard precursor with reduced energy consumption. An increased speed of press production will be obtained.

Optionally, the at least one barrier layer may comprise a first barrier layer and a second barrier layer, the first barrier layer being arranged on a first side of the rigid press layer and the second barrier layer being arranged on a second side of the rigid press layer, the second side being on an opposite side of the rigid press layer with respect to the first side. The press plate having two barrier layers is advantageously used between two pressboard precursors. The press plate provides a robust and reliable means for compressing the pressboard precursor and to remove liquid from the pressboard precursor with reduced energy consumption. An increased speed of press production will be obtained.

Optionally, the fluid may be liquid water, liquid water comprising a compound or additive dissolved in the water, water vapor and/or water vapor comprising a compound or an additive.

Optionally, the barrier layer may be a barrier sheet or a barrier fabric. Using a barrier layer, a paperboard of higher surface quality may be obtained, since imprint from the press plate on the pressboard may be reduced. Further, the smoother surface of the pressboard may be advantageous for pressboards used for electric insulation. The smoother surface may for example increase resistance to electric breakdown of the pressboard. Further, the use of the barrier layer promotes a more even density distribution and increased tensile strength of the pressboard.

Optionally, the barrier layer may be a metallic sheet, a polymer sheet or a composite sheet comprising metal and polymer. It may further prevent the fibers from a wet pressboard precursor to escape through the barrier layer. Further the sheet may have a surface, such as a smooth surface, which may further enable a reduced imprint on the pressboard surface.

Optionally, the barrier layer may be a fabric of metal fibers and/or polymer fibers. A fabric may have a smooth surface which will enable a reduced imprint on the pressboard surface. It may prevent the fibers from a wet pressboard precursor to escape through the barrier layer.

Optionally, the barrier layer may comprise pores going through the barrier layer. An improved permeability may thereby be obtained.

Optionally, the filtering capability of the barrier layer may be such that fibers from the pressboard precursor of a size larger than 5.0 $\mu$m will not pass through the barrier layer. This may prevent the fibers from a wet pressboard precursor to escape through the barrier layer.

Optionally, the barrier layer may be perforated. An improved permeability may be obtained.

Optionally, the filtering capability of the barrier layer may be such that fibers from the pressboard precursor of a size larger than 5.0 $\mu$m will not pass through the barrier layer. This may prevent the fibers from a wet pressboard precursor to escape through the barrier layer.

Optionally, the barrier layer may have a thermal diffusivity (D) higher than 0.000001 m²/s. The thermal diffusivity is defined as the ratio of thermal conductivity (k) divided by the product of the density (p) and the specific heat capacity (Cp), i.e $D = \frac{k}{\rho\,Cp}$. The heat achieved by the heating means may more easily be conducted to the pressboard precursor, which may improve the dewatering and the drying of the pressboard precursor.

Optionally, the rigid press layer may have a thermal diffusivity (D) less than 0.000001 m²/s. The thermal diffusivity is defined as the ratio of thermal conductivity (k) divided by the product of the density (p) and the specific heat capacity (Cp), i.e $D = \frac{k}{\rho\,Cp}$. The heat achieved by the heating means may not so easily be conducted through and out from the rigid press layer. This may increase the possibility that the heat is conducted to the pressboard precursor which improves the process for drying the pressboard precursor.

Optionally, the rigid press layer may comprise of a porous polymer material, a porous ceramic material, a porous metallic material or a combination of any of these materials. The rigid press layer of a porous material will have a robust structure and may facilitate dewatering and drying of the pressboard precursor.

Optionally, the porous material may be a cellular polymer material, a cellular ceramic material, a cellular metallic material or a combination of any of these materials. The rigid press layer will have a robust structure and may facilitate dewatering and drying of the pressboard precursor.

Optionally, the porous material may be a three-dimensional lattice structure material. The three-dimensional lattice structure will be a robust structure and will have suitable passages for fluid transport which may improve the dewatering and the drying of the pressboard precursor.

Optionally, the three-dimensional lattice structure material may be a triply periodic minimal surface (TPMS) material. A TPMS material may be a robust structure and may have suitable passages for fluid transport which may improve the dewatering and the drying of the pressboard precursor.

Optionally, the heating means may be arranged in the barrier layer(s) or between the barrier layer(s) and the rigid press layer. The heating and drying of the pressboard percussor will be improved.

Optionally, the heating means may comprise heating means including hot fluid, electric heating means for example. Optionally the heating means may be one or more heating channels comprising hot fluid, such as water or steam.

Optionally, the press plate may further comprise a wire-mesh layer arranged at the first surface of the barrier layer. A wire-mesh layer may further improve the dewatering and the drying of the pressboard precursor.

Optionally, the press plate may comprise first sealing means sealing around an outer circumference of the press plate between the first side and the second side of the rigid press layer. The first sealing means may be used in combination with means for evacuating fluid from the press plate and a pressboard precursor during pressure.

Optionally, the press plate may comprise outlet means connectable to a pump for suction of fluid, or for applying vacuum to the outlet. The evacuation of fluid, such as liquid water and/or water vapor may be increased by applying vacuum to the outlet and the dewatering and drying time be reduced. The outlet may be connected to an outer edge of the rigid press layer.

Optionally, the press plate may further comprise one or more fluid evacuation channels arranged in the rigid press layer. The evacuation of fluid through an evacuation channel will be easier, due to reduced resistance of fluid flow in an evacuation channel. An effective transport of moisture from the system will be obtained.

Optionally, the press plate may be a press plate for compressing at least one pressboard precursor for electrical insulation.

According to a second aspect, a system for compressing at least one pressboard precursor as defined in independent claim 12 is disclosed herein. The system comprises at least two press plates as mentioned above, the press plates being arranged to form a stack with intermediate space between adjacent press plates to receive one or more of the at least one pressboard precursors within the intermediate space(s). The system provides a system which will provide a reduced dewatering and drying time while obtaining a pressboard having improved quality.

Optionally, the system may comprise the above mentioned press plates comprising first sealing means, wherein the system further comprises second sealing means adapted to seal between outer circumferential edge portions of the respective press plates such that each intermediate space is confined, and wherein the system comprises outlet means with at least one connection port for connection of at least one pump for suction of fluid or applying a vacuum to the connection port, the outlet means being configured to provide fluid communication between the rigid press layer and the pump. Further reduced dewatering and drying time will be obtained and a pressboard having improved quality may be obtained.

Optionally, the outlet means may be arranged and connected to an outer edge of the rigid press layer on at least a portion of the edge of the rigid press layer. The arrangement of the outlet means at an outer edge of the rigid press layer will increase the evacuation of fluid from the press plate.

According to a third aspect, a method for compressing at least one pressboard precursor, as defined in independent claim 14 is disclosed herein. The method comprises:

arranging at least one pressboard precursor between two press plates as disclosed above,
forcing the press plates closer to each other, thereby compressing the at least one pressboard precursor, and
heating the pressboard precursor using the heating means to heat the at least one pressboard precursor by thermal conduction.

The method provides a method which will reduce the dewatering and drying time while obtaining a pressboard having improved quality.

Optionally, the method may comprise arranging the press plates such that their respective barrier layers face the pressboard precursor. The barrier layers may reduce the leakage of fibers from the pressboard precursor and further, the barrier layer may have a surface which may enable a reduced imprint on the pressboard surface.

Optionally, the method may comprise

sealing the outer circumferential edge portions of the respective press plates and the respective pressboard precursor(s) and
applying suction of fluid or applying vacuum to an outlet means via a connection port by at least one pump. A reduced dewatering and drying time may be obtained.

Further advantages and advantageous features of the disclosure are disclosed in the following description and in the dependent claims.

BRIEF DESCRIPTION OF THE DRAWINGS

Figure1 discloses a side view of a press plate according to the disclosure together with a pressboard precursor.
Figure 1a discloses a side view of a press plate according to the disclosure.
Figure 1b discloses an alternative of a press plate, in a side view, according to the disclosure.
Figure 2 discloses an alternative press plate, in a side view, according to the disclosure together with two pressboard precursors.
Figure 2a discloses an alternative press plate, in a side view, according to the disclosure.
Figure 3 discloses a further alternative press plate, in a side view, according to the disclosure together with two pressboard precursors.
Figure 4 discloses a further alternative press plate, in a side view, according to the disclosure together with two pressboard precursors.
Figure 5 discloses a system according to the disclosure.

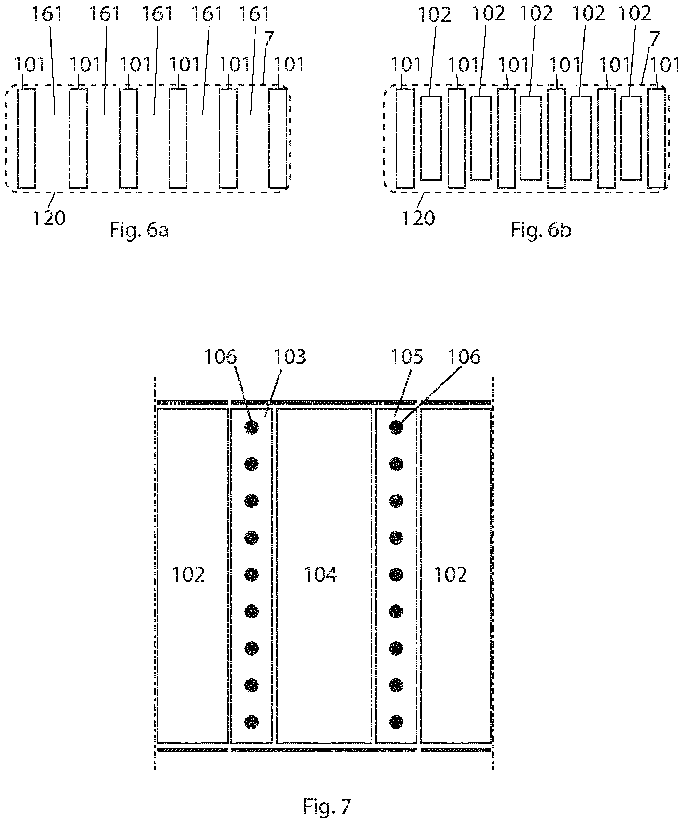

Figure 6a and 6b schematically show a system using more than two press plates to provide more than one intermediate space between the press plates such that more than one pressboard precursor can be sandwiched between the press plates and compresses at the same time by compression of the whole sandwiched stack of press plates and pressboard precursors arranged between the press plates. Figure 6a shows the plurality of press plates before pressboard precursors are positioned between the press plates, and figure 6b shows the press plates with pressboard precursors positioned between the press plates, before compression of the pressboard precursors.
Figure 7 discloses a press plate according to the disclosure, in a view from above, together with two pressboard precursors.
Figure 8 shows an example of a triply periodic minimal surface, TPMS, structure.
Figure 9 shows a flow chart disclosing the actions of the method according to the disclosure.

A same reference numeral is generally not repeated for a same feature occurring in several figures.
The drawings are schematic and not necessarily drawn to scale.

DETAILED DESCRIPTION OF PREFERRED EMBODIMENTS

Embodiments of a press plate for compressing a pressboard precursor will hereinafter be described with reference to the appended drawings showing press plates as disclosed herein.
As mentioned above, a pressboard is typically produced from pure unbleached cellulose taken from wood, such as long fibered coniferous wood. The pressboard may alternatively be produced from cellulose fibers from other sources such as cotton, hemp and jute or other tree types. Alternatively, polymer fibers may be used or a combination of cellulose and polymer fibers. In addition, additives may be used, such as binders and fillers. The pressboards usually have a thickness of 1.0 to 100.0 mm, as initial thickness before starting the pressing.

Pressboard is conventionally manufactured using hot press operation in which a plurality of wet fiber precursor sheets are interposed between press plates to form a hanging stack which is pressed and heated to remove water and dry the pressboard precursors into finished pressboards. A plurality of wet fiber precursor sheets may alternatively be interposed between press plates and may be arranged horizontally. When referring to "pressboard precursor" it is referred to the sheet or board before compression and drying. After compression and drying the expression "pressboard" is used.

Pressboard is conventionally manufactured using a multi-daylight hot press operation in which a plurality of wet pressboard precursors are interposed between press plates to form a hanging stack which is pressed and heated to remove water and dry the pressboard precursors. A plurality of wet pressboard precursors interposed between press plates may also for a horizontal stack.

The water removal and drying process may be a process in which the press plates are kept closed until the heated pressboard precursor is dried. Alternatively, the drying process may use cycling with repeated separation and closing of the press plates. Separation enables moisture to easier leave the pressboard precursor material, whereafter additional compression and any further heating is made by again closing the press plates and pressing the stack of press plates.

According to the present disclosure, the dewatering and drying process is improved by providing a press plate as disclosed herein for compressing pressboard precursor. The press plate has improved permeability for evacuation of fluid which will increase quality of the pressboard and further reduce the production time, reduce the energy cost and thereby the cost for the production.

By a "rigid press layer" is meant a press layer which is able to withstand a pressure when compressing the pressboard precursors, so that the press layer does not lose its capability to transport fluid through the press layer.

By "passage" is meant an internal passage. Thus, the passages for fluid transport are internal passages of the rigid press layer.

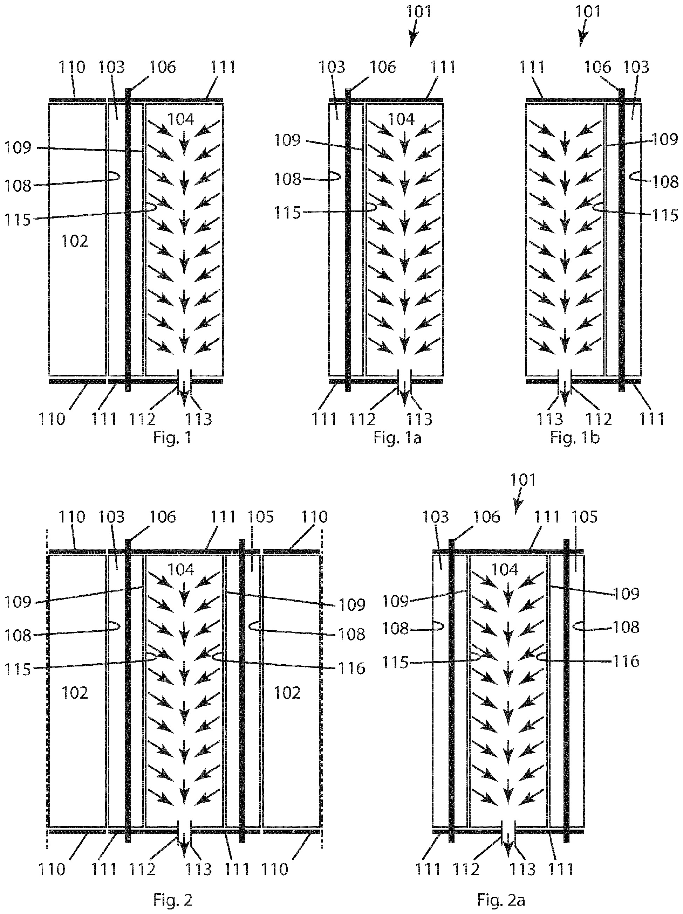

Figure 1a, 1b disclose two embodiments of a press plate 101. In figure 1, the press plate 101 also shown in figure 1a is shown together with a pressboard precursor 102 to be compressed. The press plate 101 comprises a fluid permeable barrier layer 103 and a rigid press layer 104 comprising passages for fluid transport. The barrier layer 103 prevents fibers to pass through the barrier layer 103. The fibers may be prevented to pass through the barrier layer 103 from the pressboard precursor 102 to the rigid press layer 104. Further, the permeable barrier layer 103 has a first surface 108 arranged to face a pressboard precursor 102 which is to be compressed. The rigid press layer 104 comprises passages for fluid transport. Further, the press plate comprises heating means 106 for heating the pressboard precursor(s) 102. The permeable barrier layer 103 may be permeable in a direction from the pressboard percussor 102 to the rigid press layer 104. Further, the permeable barrier layer 103 may have a second surface 109 facing the press layer 104. The second surface 109 of the permeable barrier layer 103 may be facing a first side 115 of the press layer 104 or may be facing a second side 116 of the press layer 104.

Figure 1a discloses a press plate 101 according to the disclosure. The press plate 101 comprises a fluid permeable barrier layer 103 and a rigid press layer 104 comprising passages for fluid transport. The barrier layer 103 prevents fibers to pass through the barrier layer. The press plate 101 is the same as the press plate in figure 1. However, the press plate 101 is not shown together with a pressboard precursor. Figure 1b discloses an alternative press plate 101. The press plate in figure 1b is showing a press plate comprising a fluid permeable barrier layer 103 and a rigid press layer 104 comprising passages for fluid transport. The press plate is similar to the press plate in figure 1a. However, the fluid permeable barrier layer 103 is arranged on the other side of the press layer 104. For the press plate in the embodiment of figures 1a and 1b, the heating means 106 is arranged in the barrier layer 103. The barrier layer 103 has a first surface 108 which is arranged to face a pressboard percussor 102 to be compressed.

Figure 2a discloses an embodiment of a press plate 101. In figure 2, the press plate 101 also shown in figure 2a is shown together with two pressboard precursors 102. The press plate 101 comprises a fluid permeable barrier layer 103 and a rigid press layer 104 comprising passages for fluid transport. The fluid permeable barrier layer in this embodiment comprises a first barrier layer 103 and a second barrier layer 105. The first barrier layer 103 is arranged on a first side 115 of the rigid press layer 104 and the second barrier layer 105 is arranged on the second side 116 of the rigid press layer 104. The second side 116 being on an opposite side of the rigid press layer 104 with respect to the first side 115. Further, the permeable barrier layer 103, 105 may have a second surface 109 facing the press layer 104. The second surface 109 of the permeable barrier layer 103, 105 may be facing the first side 115 of the press layer 104 or may be facing the second side 116 of the press layer 104.

Further, figure 2a discloses a press plate 101 which is also disclosed in figure 2. The press plate 101 is a press plate 101 for compressing a pressboard precursor which is not shown in this figure. The press plate 101 comprises a first fluid permeable barrier layer 103 preventing fibers to pass through the barrier layer 103. The barrier layer 103 of the embodiment has a first surface 108 arranged to face a pressboard precursor 102 to be compressed. Further, the press plate 101 in the embodiment comprises a rigid press layer 104, comprising passages for fluid transport. Further, the press plate 101 comprises heating means 106 for heating the pressboard precursor. The press plate 101 in the embodiment of figure 2a further comprises a second barrier layer 105. The first barrier layer 103 is arranged on a first side 115 of the rigid press layer 104 and the second barrier layer 105 is arranged on a second side 116 of the rigid press layer 104. The second side 116 is on an opposite side of the rigid press layer 104 with respect to the first side 115. For the embodiment of figure 2a, the heating means 106 is arranged in the barrier layer 103, 105.

Arrows are shown in the press layer 104 in the figures which schematically indicate the transport way for the fluid, which could be for example liquid water and/or water vapor.

When using the press plate 101 as disclosed herein, fluid is transported through the press plate 101. The press plate 101 provides a robust and reliable means for compressing the pressboard precursor 102 to a given thickness and to remove liquid from the pressboard precursor 102 with reduced energy consumption. Further, an improved quality and homogeneity near and at the surface will be obtained due to faster evacuation of liquid and vapor from the surface through the press plate 101.

The produced pressboard may obtain a smooth surface by the use of the permeable barrier layer 103, 105. A smooth surface may be an advantage when it refers to pressboards used as insulation material for electric machines and capacitors, for example in oil-filled transformers and distribution transformers.

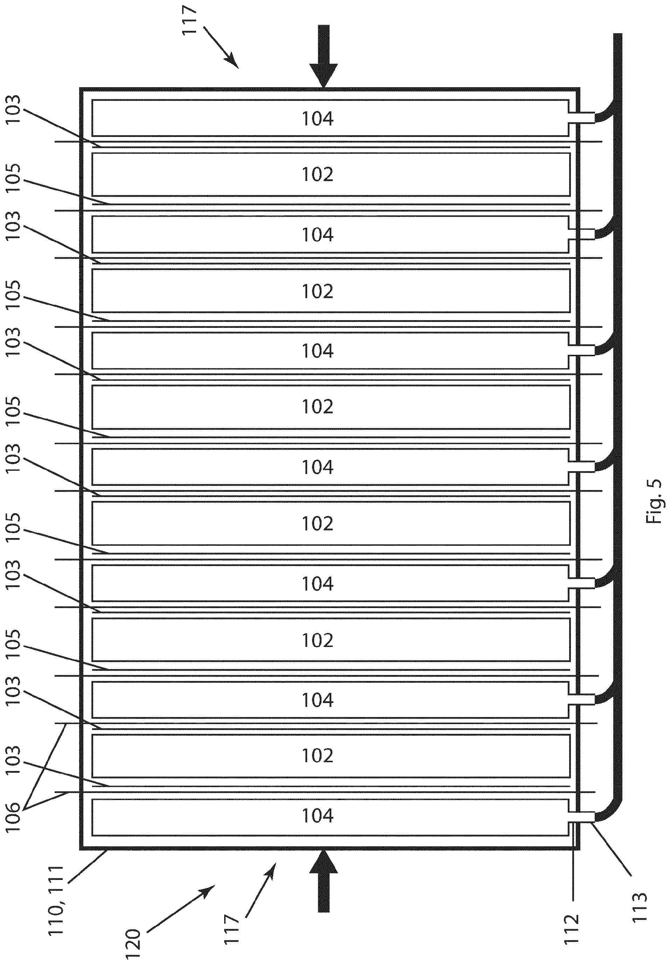

When compressing pressboard precursors 102 for dewatering and drying, the pressboard precursors 102 may be arranged in a press plate stack. This is schematically shown in figure 6a, 6b and figure 5. The pressboard precursors 102 are compressed between the press plates 101. The press plates 101 are typically hanging vertically, with the pressboard precursors 102 hanging vertically between the press plates 101. The press plates are indicated by the barrier layers 103, 105 and the press layer 104 in the figure 5. The stack of press plates is then pressed using any suitable pressing/clamping device (not shown), for example using a hydraulic cylinder pressing the stack of press plates. Arrows at the end 117 of the stack is shown in figure 5, indicating the force applied from a pressing/clamping device.

Figure 6a shows a system 120 comprising several press plates that are typically used together as a "stack" such that a plurality of pressboard precursors 102 can be compressed at once, sandwiched between the press plates 101, as shown in figure 6b. Intermediate spaces 161 are shown in figure 6a, in which the pressboard precursors 102 are to be arranged for pressing between the press plates 101. Figure 6b thus shows the system 120 when pressboard percussors 102 are arranged between the press plates 101.

As can be seen in figure 5, the press plates 101 are arranged in a stack. In the end 117 of the stack, a press plate 101 is arranged, such as the press plate disclosed in figure 1a or 1b. The press plate 101 arranged in the end of the stack has at least one fluid permeable barrier layer 103. The press plates 101 arranged within the stack preferably has two fluid permeable barrier layers 103, 105 such as the press plate disclosed in figure 2a for example. However, any of the press plates 101 disclosed herein may be arranged in the stack. It is preferred to arrange press plates comprising a first and a second fluid permeable barrier layers within the stack. Such a press plate 101 will have a permeable fluid layer faced against a pressboard precursor on each side, which is advantageous. In the end 117 of the stack the press plate 101 has only one side faced towards a pressboard precursor, which may be a barrier layer 103. One side of the press plate 101 may be faced to for example a pressing/clamping device, such as a hydraulic cylinder (not shown). The force from for example a pressing/clamping device is shown by arrows at the ends 117 of the stack or at the ends of the system 120.

The press plates 101 may be hanging vertically, with the pressboard precursors 102 hanging vertically between the press plates 101. Alternatively, the press plates 101 may be arranged horizontally with the pressboard precursors arranged horizontally between the press plates 101.

The press plate 101, as shown in figures 1 to 4 for example, is used for dewatering and drying of pressboard precursors 102. Pressboard precursors are a suspension of cellulose fibers in water which is taken up by the board machine where paper layers are formed, rolled onto a formation role, and thereafter cut to sheets. In addition to water some compounds or additives may be added to the mixture of cellulose fibers and water.

As mentioned above, the press plate comprises at least one fluid permeable barrier layer 103, 105 and a rigid press layer 104 comprising passages for fluid. The fluid to be evacuated and dried from the pressboard precursor may be liquid water, liquid water comprising a compound or an additive dissolved in the water, water vapor and/or water vapor comprising a compound or an additive.

The permeable barrier layer 103, 105 should prevent fibers to pass through the barrier layer. The barrier layer 103, 105 may have a thickness of 0.1 to 50 mm. The thickness may be larger if the heating means 106 is arranged in the barrier layer 103, 105. If the heating means 106 is arranged in the barrier layer 103, 105, the barrier layer may have thickness of 10 to 50 mm.

The barrier layer may be a barrier sheet or a barrier fabric.

The barrier layer 103, 105 may comprise pores going through the barrier layer.

The filtering capability of the barrier layer 103, 105 may be such that fibers from the pressboard precursor 102 of a size larger than 5.0 $\mu$m will not pass through the barrier layer 103, 105. This may hinder fibers from escaping from the pressboard precursor.

The barrier layer 103, 105 may be a barrier sheet, such as a metallic sheet, a polymer sheet or a composite sheet comprising metal and polymer. This may advantageously give the pressboard a smooth surface when dewatered and dried. The metallic sheet, polymer sheet or composite sheet may comprise pores going through the barrier layer.

Further, the barrier layer 103, 105 may be a barrier fabric of metal fibers and/or polymer fibers. This may advantageously give the pressboard a smooth surface when dewatered and dried. The fabric may be woven from fibers.

Further, the barrier layer 103, 105 may be perforated.

The filtering capability of the barrier layer may be such that fibers from the pressboard precursor of a size larger than 5.0 $\mu$m will not pass through the barrier layer.

The barrier layer 103, 105 may have a thermal diffusivity (D) higher than 0.000001 m²/s. The thermal diffusivity is defined as the ratio of thermal conductivity (k) divided by the product of the density (p) and the specific heat capacity (Cp), i.e $D = \dfrac{k}{\rho\, Cp}$. If the barrier layer has a thermal diffusivity (D) higher than 0.000001 m²/s, the heat obtained by the heating means may be conducted to the pressboard precursor, which may improve the dewatering and the drying of the pressboard precursor. By supplying heat to the pressboard precursor, liquid and vapor in the pressboard precursor more easily evaporates. Examples of materials to be used in the barrier layer may be stainless steel, polymers and/or a composition of both materials.

The rigid press layer 104 may have a thermal diffusivity (D) less than 0.000001 m²/s. If the rigid press layer 104 has a thermal diffusivity (D) less than 0.000001 m²/s, the heat obtained by the heating means may not so easily be conducted through and out from the rigid press layer 104. This may increase the possibility that the heat is conducted to the pressboard precursor 102 which improves the process for drying the pressboard precursor 102.

A low thermal conductivity of the rigid press layer 104 may limit the evacuation of heat from the system. The heat should be favored to be transported from the heating means 106 to the pressboard precursor 102. It is preferred that the heat is conducted to the pressboard precursor 102 and not to the rigid press layer 104. Thus, the thermal conductivity as mentioned above, may improve the heating and drying of the pressboard precursors 102 in an effective way.

The rigid press layer 104 should be made of a strong and durable material.

The rigid press layer 104 may have a thickness of 10 to 200 mm.

The rigid press layer 104 may comprise or consist of a porous polymer material, a porous ceramic material, a porous metallic material or a combination of any of these materials. A porous material comprising passages for fluid may also have a thermal conductivity which will be suitable for the rigid press layer 104

The porous material may be a cellular polymer material, a cellular ceramic material, a cellular metallic material or a combination of any of these materials. At least some of the cells may be open for forming a passage for fluid. Thus, the cellular material may comprise open cells.

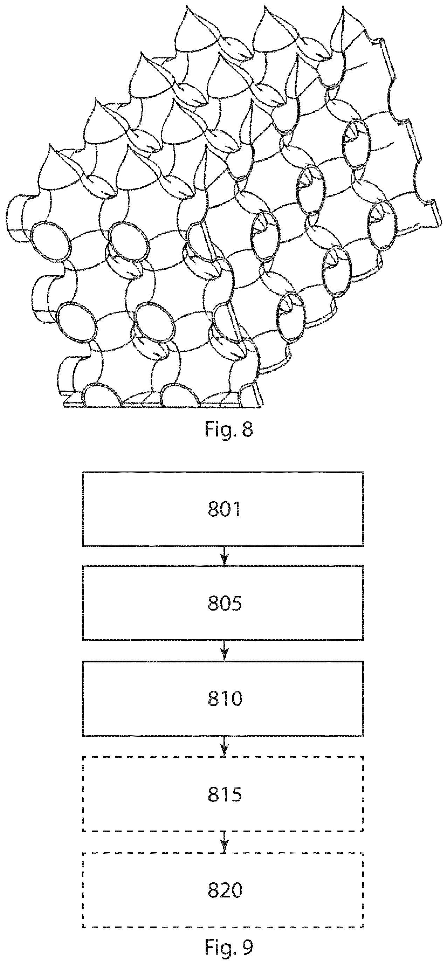

The porous material may be a three-dimensional lattice structure material. The three-dimensional lattice structure material will comprise passages for transport of fluid. The lattice structure may be a triply periodic minimal surface (TPMS) material, such as disclosed in for example EP3905286A1. The TPMS structure comprises cells in a particular structure. The cells of the TPMS may have passages for fluid in several directions. For example, the passages of the TPMS may transport fluid from the pressboard precursor via the barrier layer from one side of the TPMS layer to the inside of the TPMS layer and further out from the TPMS layer. A lattice structure material or a TPMS material may for example be produced by 3D printing. An example of a TPMS structure is disclosed in figure 8.

The heating means 106 may be arranged in the barrier layer 103, 105, which is shown for example in figure 2. The barrier layer 103, 105 will then be heated. Further, the barrier layer may have a quite high thermal conductivity. The heating means is quite close to the pressboard precursor 102 and the heat may be transferred to the pressboard precursor 102 and thereby heat the water in the pressboard precursor which may evaporate and be transferred towards the press plate 101 and through the barrier layer 103, 105 into the rigid press layer 104. The rigid press layer 104 may have a lower heat conductivity than the barrier layer 103, 105, which may facilitate that the heat from the heating means 106 is transferred in the direction towards the pressboard precursor 102. The heat is thus favored to be transported from the heating means 106 to the pressboard precursor 103, 105. The heating means 106 are arranged in the barrier layer 103, 105 also in the press plates as shown in figures 1, 1a, 1b, 2a and 4.

The heating means 106 may extend from one edge to another edge of the barrier layer 103, 105.

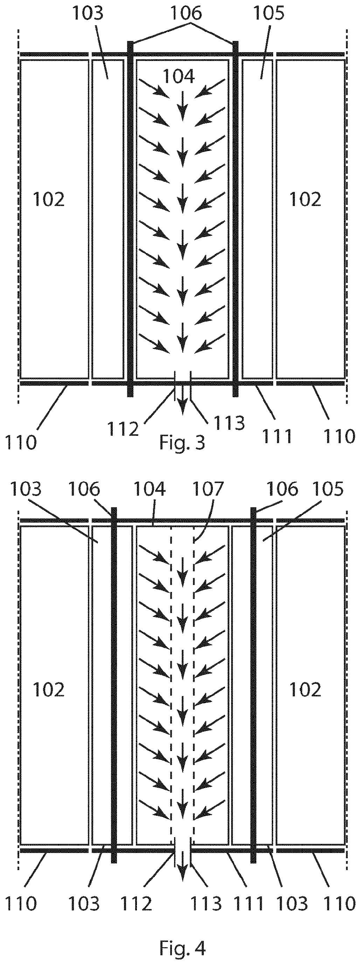

Alternatively, the heating means 106 may be arranged between the barrier layer(s) 103, 105 and the rigid press layer 104, which is shown in figure 3. The heating means 106 are quite close to the pressboard precursors 102 which means that the heat is conducted a quite short distance to the pressboard precursor and the heat is transported through the barrier layer 103, 105 which may have a higher thermal conductivity than the rigid press layer 104 arranged on the other side of the heating means.

Figure 7 discloses a press plate according to the disclosure, in a view from above, together with two pressboard precursors. The press plate is shown together with pressboard precursors 102. The press plate comprises a first and second barrier layer 103, 105 and a rigid press layer 104. The embodiment of figure 7 is showing an example how the heating means 106 may be arranged in the barrier layer 103, 105.

The press plate 101 as disclosed herein may further comprise a wire-mesh layer (not shown) arranged at the first surface 108 of the at least one barrier layer 103, 105. Wire-mesh layers may further avoid that cellulose fibers are escaping from the pressboard precursor(s) 102 and increase fluid evacuation. A wire-mesh layer may comprise metal fibers or polymer fibers.

The press plate 101 may further comprise first sealing means 111, as shown in figures 1-4. The first sealing means may seal around an outer circumference of the press plate 101 between the first side 115 and the second side 116 of the rigid press layer 104.

Further, the press plate 101 may comprise outlet means 112 connectable to a pump for suction of fluid, or for applying vacuum to the outlet, as shown in figures 1 to 4. The first sealing means 111 and the outlet means 112 which are connectable to a pump for suction, may facilitate the escape of fluid from the press plate 101, which further facilitates the escape of fluid from the pressboard precursors 102. The suction from the pump will facilitate the escape of fluid.

The outlet means 112 may be arranged so that they extend through the first sealing means 111.

The press plate 101 may further comprise one or more fluid evacuation channels 107 arranged in the rigid press layer 104 as shown in figure 4. As already mentioned, the fluid may be liquid water, liquid water comprising a compound or additive dissolved in the water, water vapor and/or water vapor comprising a compound or an additive. The fluid evacuation channel(s) may extend through the rigid press layer 104. The fluid evacuation channels may extend through a part or parts of the rigid press layer 104. However, it is preferred that the fluid evacuation channel extends to an edge part of the rigid press layer 104. A fluid evacuation channel may for example extend from one edge to another edge of the rigid press layer 104. Further, the fluid evacuation channel may extend over the whole rigid press layer 104. It might in some cases be suitable to arrange spacers or similar suitable elements in the fluid evacuation channel(s) 107 in order to keep the strength of the fluid evacuation channel 107.

The fluid evacuation may be increased by the fluid evacuation channel 107. The increase of evacuation of fluid may be further increased when a pump for suction is connected to the rigid press layer 104 via the outlet means 112 and the connection port 113. Fluid is withdrawn from the pressboard precursors 102 via the rigid press layer 104 and via the barrier layer 103, 105. The escape of the fluid may be facilitated by the suction through the evacuation channel compared to the resistance in the press layer material. In addition, evacuation channels 107 may reduce the weight of the rigid press layer 104 and thus also the weight of the press plate 101. The evacuation channel 107 may have one of its ends in connection with the outlet means 112 of the press plate 101 in order to facilitate the escape of the fluid from the pressboard precursor 102 and the press plate 101. The outlet means 112 and connection port 113 may further comprise one or more valves (not shown).

The press plate may be a press plate for compressing at least one pressboard precursor for electrical insulation.

The disclosure herein provides a system 120, as shown in figure 6a, for compressing at least one pressboard precursor (not shown in figure 6a). The system 120 comprises at least two press plates 101 as disclosed herein. The press plates 101 are arranged to form a stack with intermediate space 161 between adjacent press plates 101 to receive one or more of the at least one pressboard precursors within the intermediate space(s) 161.

Alternatively, the system 120, as disclosed in figure 5, may comprise the above mentioned press plates 101 comprising first sealing means 111, wherein the system 120 further comprise second sealing means 110 adapted to seal between outer circumferential edge portions of the respective press plates 101 such that each intermediate space (the intermediate space in figure 5 include a pressboard percussor 102) is confined, wherein the system 120 comprises outlet means 112 with at least one connection port 113 for connection of at least one pump for suction of fluid or applying a vacuum to the connection port 113. The outlet means 112 may be configured to provide fluid communication between the rigid press layer 104 and the pump.

The outlet means 112 may be arranged at an outer edge of the rigid press layer 104 on at least a portion of the edge of the rigid press layer 104.

There are two sealing means provided, first sealing means 111 of the press plates 101 and second sealing means 110 which seals the respective intermediate space. Those sealing means 110 and 111 seal the system 120 and it may be possible to withdraw fluid from the system 120. The sealing means may be made of a fluid-tight sheet.

Disclosed herein is a method for compressing at least one pressboard precursor 102. The method is illustrated in a flow chart shown in figure 9 and comprises the actions listed below. Optional actions are marked by dashed lines.

The method comprises:

Action 801: arranging at least one pressboard precursor 102 between two press plates 101 as disclosed herein,
Action 805: forcing the press plates 101 closer to each other, thereby compressing the at least one pressboard precursor 102, and
Action 810: heating the pressboard precursor 102 using the heating means 106 to heat the pressboard precursor 102 by thermal conduction. The heating means 106 may comprise heating means including hot fluid or electric heating for example. The heating means 106 may be heating channels comprising hot fluid, such as water or steam.

The method may comprise arranging the press plates 104 such that their respective barrier layers 103, 105 face the pressboard precursor 102.

The method may comprise an optional action 815: sealing the outer circumferential edge portions of the respective press plates 101 and the respective pressboard precursor(s) 102 and

an optional action 820: applying suction of fluid or applying vacuum to an outlet means 112 via a connection port 113 by at least one pump.

It is to be understood that the present disclosure is not limited to the embodiments described above and illustrated in the drawings; rather, the skilled person will recognize that many changes and modifications may be made within the scope of the appended claims.

## Claims

1. A press plate (101) for compressing at least one pressboard precursor (102), wherein the press plate (101) comprises,

   at least one fluid permeable barrier layer (103, 105), wherein the at least one barrier layer (103, 105) prevents fibers to pass through the barrier layer (103), and wherein the at least one barrier layer (103, 105) has a first surface (108) arranged to face a pressboard precursor (102) to be compressed;
   a rigid press layer (104), the rigid press layer (104) comprising passages for fluid transport; and
   heating means (106) for heating the pressboard precursor(s) (102).

2. The press plate (101) according to claim 1, wherein the at least one barrier layer comprises a first barrier layer (103) and a second barrier layer (105), the first barrier layer (103) being arranged on a first side (115) of the rigid press layer (104) and the second barrier layer (105) being arranged on a second side (116) of the rigid press layer (104), the second side (116) being on an opposite side of the rigid press layer (104) with respect to the first side (115).

3. The press plate (101) according to any one of claims 1 and 2, wherein the barrier layer (103, 105) is a barrier sheet, such as a metallic sheet, a polymer sheet or a composite sheet comprising metal and polymer; or a barrier fabric, such as a fabric of metal fibers and/or polymer fibers.

4. The press plate (101) according to any one of the preceding claims, wherein the barrier layer (103, 105) comprises pores going through the barrier layer.

5. The press plate (101) according to any of the preceding claims, wherein the barrier layer (103, 105) has a thermal diffusivity (D) higher than 0.000001 $m^2$/s.

6. The press plate (101) according to any of the preceding claims, wherein the rigid press layer (104) has a thermal diffusivity (D) less than 0.000001 $m^2$/s.

7. The press plate (101) according to any of the preceding claims, wherein the rigid press layer (104) comprises of a porous polymer material, a porous ceramic material, a porous metallic material or a combination of any of these materials.

8. The press plate (101) according to claim 7, wherein the porous material is a cellular polymer material, a cellular ceramic material, a cellular metallic material or a combination of any of these materials.

9. The press plate (101) according to claim 7, wherein the porous material is a three-dimensional lattice structure material, such as a triply periodic minimal surface (TPMS) material.

10. The press plate (101) according to any of the preceding claims, wherein the heating means (106) is arranged in the barrier layer(s) (103, 105) or between the barrier layer(s) (103, 105) and the rigid press layer (104).

11. The press plate (101) according to any of the preceding claims, wherein the press plate (101) comprises first sealing means (111) sealing around an outer circumference of the press plate between the first side (115) and the second side (116) of the rigid press layer (104) and/or the press plate (101) comprises outlet means (112) connectable to a pump for suction of fluid, or for applying vacuum to the outlet.

12. A system (120) for compressing at least one pressboard precursor (102), the system (120) comprising at least two press plates (101) according to any of claims 1-11, the press plates (101) being arranged to form a stack with intermediate space (161) between adjacent press plates (101) to receive one or more of the at least one pressboard precursors (102) within the intermediate space(s) (161).

13. The system (120) according to claim 12, when dependent on claim 11, wherein the system (120) comprises second sealing means (110) adapted to seal between outer circumferential edge portions of the respective press plates (101) such that each intermediate space (161) is confined, and wherein the system (120) comprises outlet means (112) with at least one connection port (113) for connection of at least one pump for suction of fluid or applying a vacuum to the connection port (113), the outlet means (112) being configured to provide fluid communication between the rigid press layer (104) and the pump.

14. A method for compressing at least one pressboard precursor (102), wherein the method comprises:

arranging (801) at least one pressboard precursor (102) between two press plates (101) according to any of claim 1-11,
forcing (805) the press plates (101) closer to each other, thereby compressing the at least one pressboard precursor (102), and
heating (810) the pressboard precursor using the heating means (106) to heat the at least one pressboard precursor (102) by thermal conduction.

15. The method according to any of claims 14, wherein the method comprises

sealing (815) outer circumferential edge portions of the respective press plates (101) and the respective pressboard precursor(s) and applying suction of fluid or applying (820) vacuum to an outlet means (112) via a connection port (113) by at least one pump.

Fig. 1

Fig. 1a

Fig. 1b

Fig. 2

Fig. 2a

Fig. 3

Fig. 4

Fig. 5

161   161   161   161   161
101   101   101   101   101 7 101

120   Fig. 6a

102   102   102   102   102
101   101   101   101   101 7 101

120   Fig. 6b

106   103   105   106

102   104   102

Fig. 7

Fig. 8

801

805

810

815

820

Fig. 9

Europäisches
Patentamt

European
Patent Office

Office européen
des brevets

# EUROPEAN SEARCH REPORT

Application Number

EP 22 21 0632

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2018 024228 A (BOEING CO) 15 February 2018 (2018-02-15) | 1-8, 10-14 | INV. B27D3/02 |
| Y | * paragraphs [0003], [0005], [0013], [0026] – [0028], [0030], [0053] – [0055]; figures * | 15 | B27N3/04 B27N3/08 B27N3/20 B30B7/02 B30B15/06 |
| Y | DE 102 34 235 A1 (SIEMPELKAMP MASCH & ANLAGENBAU [DE]) 19 February 2004 (2004-02-19) | 15 | |
| A | * paragraphs [0001], [0004]; figures 1-8 * | 1-14 | |
| A | US 2003/024417 A1 (VOMBERG RAINER [DE]) 6 February 2003 (2003-02-06) * abstract; figures * | 1-14 | |
| A | CN 101 108 497 B (DIEFFENBACHER GMBH & CO KG [DE]) 21 December 2011 (2011-12-21) * abstract; figures * | 1-14 | |

TECHNICAL FIELDS SEARCHED (IPC)

B27D
B27M
B30B
B27N

The present search report has been drawn up for all claims

| Place of search | Date of completion of the search | Examiner |
|---|---|---|
| The Hague | 12 June 2023 | Labre, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 378 647 A1

## ANNEX TO THE EUROPEAN SEARCH REPORT
## ON EUROPEAN PATENT APPLICATION NO.

EP 22 21 0632

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2023

| Patent document cited in search report | | Publication date | Patent family member(s) | | Publication date |
|---|---|---|---|---|---|
| JP 2018024228 | A | 15-02-2018 | EP | 3243647 A1 | 15-11-2017 |
| | | | JP | 7138414 B2 | 16-09-2022 |
| | | | JP | 2018024228 A | 15-02-2018 |
| | | | US | 2017326859 A1 | 16-11-2017 |
| DE 10234235 | A1 | 19-02-2004 | NONE | | |
| US 2003024417 | A1 | 06-02-2003 | CA | 2393125 A1 | 18-01-2003 |
| | | | DE | 10135055 C1 | 24-04-2003 |
| | | | US | 2003024417 A1 | 06-02-2003 |
| CN 101108497 | B | 21-12-2011 | CN | 101108497 A | 23-01-2008 |
| | | | DE | 102006015619 A1 | 11-10-2007 |
| | | | DE | 102006034146 A1 | 31-01-2008 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3905286 A1